# EUROPÄISCHE PATENTSCHRIFT

(11) **EP 0 934 963 B1**
(45) Veröffentlichungstag und Bekanntmachung des Hinweises auf die Patenterteilung: **22.08.2001**
(21) Anmeldenummer: 99100793.1
(22) Anmeldetag: 15.01.1999
(51) Int. Cl.: C08G 18/73, C08G 18/08, C08G 18/62, C08G 18/70, C09D 175/04

(54) **Wässrige Zweikomponenten-Polyurethanbeschichtungszusammensetzungen auf Basis von 2-Methylpentan-1,5-diisocyanat**
Aqueous polyurethane dispersions based on 2-methylpentane-1,5-diisocyanate
Dispersions aqueuses de polyurethane à base de 2-methylpentane-1,5-diisocyanate

(30) Priorität: 05.02.1998 DE 19804451
(43) Veröffentlichungstag der Anmeldung: 11.08.1999
(73) Patentinhaber: Degussa AG, 40474 Düsseldorf (DE)
(72) Erfinder: Lomölder, Rainer Dr., 48153 Münster (DE); Plogmann, Friedrich, 44581 Castrop-Rauxel (DE); Reichel, Dirk Dr., 46284 Dorsten (DE)

(56) Entgegenhaltungen:
- EP-A- 0 358 979
- EP-A- 0 554 747
- EP-A- 0 669 352
- EP-A- 0 839 846

## Beschreibung

Die Erfindung betrifft wäßrige Zweikomponenten-Beschichtungszusammensetzungen auf Basis von 2-Methylpentan-1,5-diisocyanat (in Folge als MPDI bezeichnet).

WäßrigeLacksysteme gewinnen aus wirtschaftlichen und ökologischen Gründen zunehmend an Bedeutung. In chemisch vemetzenden Zweikomponenten-Polyurethanlacken dienen freie Isocyanatgruppen enthaltende Verbindungen ("Polyisocyanate") als Härter für das Bindemittel, das im allgemeinen ein organisches Polymer mit NCO-reaktiven Gruppen ist (Polyacrylatpolyol, Polyetherpolyol oder Polyesterpolyol). Diese Lacke haben wegen der hervorragenden Eigenschaften - insbesondere aufgrund hoher Witterungs-, Vergilbungs- und Chemikalienstabilitat, sowie eines ausgezeichneten Verhältnisses von Härte und Flexibilität der mit ihnen erzeugten Beschichtungen, eine große Bedeutung erlangt. Dabei konnte bis in die jüngere Vergangenheit nicht auf organische Lösemittel verzichtet werden. (Farbe + Lack 97, 1991, 201-206). Die Verwendung von Wasser erschien lange Zeit nicht möglich, da Isocyanatgruppen bekanntlich nicht nur, wie gewünscht, mit den organisch gebundenen NCO-reaktiven Gruppen des Bindemittels, sondern auch in unerwünschter Weise mit Wasser reagieren. Dadurch entstehen Harnstoffstrukturen, und es wird Kohlendioxid frei. Dies sollte einerseits zu einer verringerten Vernetzungsdichte in der ausgehärteten Beschichtung und andererseits zur Bildung von Schaum infolge der Gasentwicklung fuhren Dies hat nachteilige Folgen für die Verarbeitbarkeit der Systeme und die optischen Eigenschaften der Beschichtungen. Insgesamt erschienen solche wäßrigen Systeme wegen zu geringer Topfzeiten und nicht voll befriedigender Eigenschaften der Beschichtungen als nicht brauchbar für die Praxis.

Die Hydrolyse der Isocyanatgruppen kann man verhindern, indem man sie blockiert (oder verkappt). Dazu setzt man die freien Polyisocyanate mit Blockierungsmitteln (sekundare oder tertiäre Alkohole, Lactame oder Oxime) um. Die blockierten Polyisocyanate sind bei Raumtemperatur und mäßig erhöhten Temperaturen stabil und können mit dem Bindemittel zu wäßrigen Einkomponenten-Beschichtungsmitteln abgemischt werden. Bei den Härtungstemperaturen der Beschichtungen wird das Blockierungsmittel abgespalten. Die frei werdenden Isocyanatgruppen reagieren mit den reaktionsfähigen Gruppen des Bindemittels unter Kettenvernetzung. Blockierte Isocyanate vermeiden zwar die mit der Hydrolyse der Isocyanatgruppen verbundenen Probleme, erfordern allerdings mit der Blockierung einen zusätzlichen Verfahrensschritt, erheblich höhere Härtungstemperaturen und setzen zudem bei der Härtung das Blockierungsmittel frei, das nicht ohne weiteres in die Umwelt entlassen werden darf.

Ein wäßriges Zweikomponenten-Polyurethan-Beschichtungssystem mit freie Isocyanatgruppen enthaltendem Härter war daher immer noch erwünscht. Nach DE 27 08 442 und DE 35 29 249 werden Kunststoff dispersionen organische Di-bzw. Polyisocyanate zur Verbesserung des Eigenschaftsbildes zugesetzt. Bei den dispergierten Kunststoffen handelt es sich jedoch nicht um organische Polyhydroxylverbindungen, wie sie in der Polyurethanchemie als Reaktionspartner für Polyisocyanate üblich sind, sondern um gegenüber Isocyanatgruppen inerte Stoffe. Der eigenschaftsverbessernde Effekt geht also nicht auf eine chemische Vernetzung zurück, sondern auf die Umhüllung des dispergierten Kunststoffs mit der aus dem Isocyanat und Wasser gebildeten Polyharnstoffverbindung.

Chemisch vernetzende wäßrige Zweikomponenten-Polyurethan-Beschichtungsmittel mit freien Polyisocyanaten als Härter für das Bindemittel wurden, soweit ersichtlich, erstmals in EP 0 358 979 beschrieben. Danach vermögen Polyhydroxyacrylate als Bindemittelkomponente bestimmte Polyisocyanate mit freien Isocyanatgruppen, die auch als Lackpolyisocyanate bezeichnet werden, zu emulgieren. Das so entstehende wäßrige Zweikomponentensystem härtet zu vernetzten Filmen aus. Die Lackpolyisocyanate sind Biuret-, Urethan-, Uretdion und/oder Isocyanuratgruppen enthaltende oligomere Derivate von gut verfügbaren monomeren oder einfachen Diisocyanaten, insbesondere von Hexamethylendiisocyanat (HDI), Isophorondiisocyanat (IPDI) und/oder Bis(isocyanatocyclohexyl)methan (H₁₂MDI oder kurz HMDI). Die nach EP 0 358 979 verwendeten Lackpolyisocyanate haben eine Viskosität bei 23°C von bis zu 1.000 mPas und weisen eine mittlere NCO-Funktionalität von 2,2 bis 5 auf. Die Lackpolyisocyanate werden, wie die zuvor erwähnten blockierten Polyisocyanate, in einem gesonderten Verfahrensschritt hergestellt und wegen ihres höheren Molekulargewichts mit organischen Lösemitteln auf eine anwendungsgerechte Viskosität verdünnt oder über den Einbau ionisch- oder nichtionisch-hydrophiler Zentren selbstdispergierbar gemacht.

Weitere Veröffentlichungen befassen sich vornehmlich mit der Erweiterung des Einsatzfeldes emulgierend wirkender Bindemittelkomponenten und der Variation - einschließlich einer nichtionischhydrophilen Modifizierung durch Alkoxylierung- der Polyisocyanat-Härterkomponenten, vor allem mit dem Ziel der Verlängerung der Topfzeit und der Verbesserung des Eigenschaftsbildes der Beschichtungen. Hydrophil modifizierte Polyisocyanate sind allerdings als Härterkomponente problematisch, weil die ausgehärteten Beschichtungen wegen der nach wie vor enthaltenen hydrophilen Gruppen mehr oder minder wasserempfindlich sind. Beispiele für Bindemittelvariationen und/oder die Verwendung hydrophil modifizierter Polyisocyanate finden sich in EP 0 469 389, 0 496 205, 0 496 210, 0 542 085, 0 542 105, 0 543 228, 0 562 436, 0 583 728, 0 587 061, 0 603 219, 0 610 450, 0 626 401, 0 639 594, 0 654 051, 0 654 052, 0 654 055, 0 657 483, 0 700 945, 0 707 608, 0 731 119, 0 742 239 und 0 746 578. Speziell mit der Herstellung hydrophil modifizierter Polyisocyanate für den Einsatz in wäßrig-dispersen Zweikomponenten-Polyurethan-Systemen befassen sich u.a. EP 0 206 059, 0 516 277, 0 540 985, 0 548 669, 0 645 410, 0 680 983, 0 703 255, 0 728 785 und 0 754 713.

Grundvoraussetzung für gute lacktechnische Eigenschaften ist bei zweikomponemigen Lackformulierungen stets eine besonders feine und möglichst homogene Vermischung der Vernetzer-mit der Bindemittelkomponente. Dies ist insbesondere bei wäßrigen Systemen von Bedeutung, wenn aufgrund der chemischen Natur der verwendeten Substanzen keine lückenlose Mischbarkeit vorliegt und sich damit homogene einphasige Systeme nicht spontan ergeben, sondern zumindest intensives Rühren notwendig ist. Aufgrund niedriger Viskosität werden bis heute vornehmlich Polyisocyanate auf Basis HDI als Härterkomponente für wäßrige 2K-PUR-Systeme eingesetzt. Gleichwohl sind Polyisocyanate auf Basis IPDI und HMDI verwendbar, allerdings wer den aufgrund des Aggregat zustan des zur Formulierung größere Mengen organische Lösemittel als im Falle von HDI-Polyisocyanaten benötigt, was man ja aber gerade bei umweltfreundlichen wäßrigen Systemen zu vermeiden sucht.

Wie erwähnt sind 2K-PUR-Systeme bekannt für ihre hohe Witterungs-, Vergilbungs- und Chemikalienbeständigkeit. Gemäß der WO 93/05090 wurde bei lösemittelhaltigen 2K-PUR-Systemen eine weitere Verbesserung der Beständigkeit der Beschichtungen gegen Umwelteinflüße bei Verwendung eines Gemisches von Polyisocyanaten des HDI mit solchen des IPDI erhalten. Negativ beeinflußt wird dagegen die Beständigkeit gegen mechanische Beanspruchungen wie z.B. Kratz- und Waschstraßenbeständigkeit (I-Lack 61, 1993, 30).

Es bestand die Aufgabe, neue wäßrige Zweikomponenten-Polyurethansystemenzu finden, um verbesserte optische, mechanische, physikochemische und applikationstechnische Eigenschaften zu erhalten.

Dies ist vor dem Hintergrund der äußerst hohen Güte lösemittelbasierender Lacksysteme von Bedeutung, die ohne Qualitätseinbußen durch umweltfreundliche wäßrige Lacksysteme bislang noch nicht ohne weiteres ersetzt werden können.

Die Aufgabe wurde durch die wäßrigen Zweikomponenten-Beschichtungszusammensetzungen gemäß den Ansprüchen gelöst.

Gegenstand der vorlie genden Erfindung sind wäßrige 2K-PUR-Beschichtungs zu sammensetzungen im wesentlichen enthaltend:
A) eine wäßrige Dispersion mindestens einer Polyolkomponente,
B) eine Polyisocyanatkomponente, auf Basis von 2-Methyl pentandiisocyanat-1,5 wobei die Mengenverhältnisse von A und B einen OH/NCO-Äquivalentverhältnis von 1 : 0,5 bis 1 : 5 entsprechen.

Überraschenderweise wurde gefunden, daß bei Verwendung von Polyisocyanaten auf Basis von MPDI als Härterkomponente in wäßrigen 2K-PUR-Systemen, vielfältige und unerwartete Vorzüge gegenüber den bislang häufig verwendeten wäßrigen 2K-PUR-Systemen mit HDI-basierenden Polyisocyanaten als Härterkomponente resultieren. So hat sich bei gleichartiger Formulierung insbesondere ein deutlich schnelleres Antrocknungsverhalten als auch eine deutlich gesteigerte Endhärte der Beschichtungen ergeben, was umso überraschender ist, denn in rein organischen Systemen war dies nicht zu beobachten. Große Vorteile ergeben sich so bei der Verarbeitung aufgrund kürzerer Staubtrockenzeit undrascherer Schleifbarkeit/Überlackierbarkeit sowie bei den Beschichtungen selbst (größere Härte und Beständigkeit gegen Umwelteinflüße bei unverändert guten Werten der Flexibilität).

Polyisocyanate auf Basis 2-Methylpentan-1,5-diisocyanat (MPDI) sind bekannt - ihre Herstellung wird beschrieben in DE 31 51 853, DE 31 51 855 und DE 32 27 779. Auch bzgl. der Verwendung von MPDI-Polyisocyanaten in Polyurethansystemen sind Veröffentlichungen erschienen. DE 31 51 854 befaßt sich eingehender mit Polyisocyanaten auf Basis MPDI in lösemittelhaltigen rein organischen 2K-PUR-Systemen, wobei eine verbesserte Thermo stabilitat bei 240°C im Vergleich mit and eren Polyisocyanaten beschrieben wird wird. Eine Verwendung von Polyisocyanaten auf Basis von MPDI als Härterkomponente in wäßrigen Zweikomponenten-Polyurethanlacken wird dagegen nicht beschrieben.

Als Bindemittelkomponente A können die für Zweikomponenten-Beschichtungszusammensetzungen üblichen hydrophilen, wasserverdünnbaren Systeme, d.h. in Wasser dispergierte Polyhydroxylverbindungen, jeweils für sich allein oder als Mischung von zwei oder mehr Vertretern, verwendet werden. Jenach Menge und Art gegebenenfalls an wesenden organischen Hilfslösemittels, Molgewicht und dem Grad der Hydrophilie sind die Bindemittelkomponenten A dispers verteilt (mit mittleren Teilchengrößen von >0,1 µm), liegen kolloiddispers (mit mittleren Teilchengrößen im Bereich von 10 bis 100 nm) oder aber in molekulardisperser Verteilung (mit mittleren Teilchengrößen von <10 nm) vor. Im allgemeinen sind sowohl dispers verteilte, als auch kolloid- und molekular disperse Anteile vorhanden. Auf jeden Fall muß die Bindemittelkomponente A als Dispersion oder als kolloid- bis molekulardisperse "Lösung" mit Wasser verdünnbar sein. Geeignete Lösemittel, die neben Wasser als kontinuierliche Phase dienen können sind solche, die im Sinne einer Isocyanatreaktion inert sind und unter Normaldruck (1013 mbar) unterhalb 300°C, vorzugsweise bei 100 bis 250°C sieden. Die bevorzugten Lösemittel weisen Ether- und Estergruppen im Molekül aufund sind soweit mit Wasser verträglich, daß die Lösungen bzw. Dispersionen Systeme mit homogen verteilter Wasser/Cosolvens-Phase darstellen. Die wäßrige "Lösung" oder Dispersion weist im allgemeinen einen Festkorpergehalt von 20 bis 80 Gew.-%, eine Viskosität bei 23°C von 10 bis 10.000 mPas und einen pH-Wert von 6 bis 10 auf.

Die Bindemittelkomponenten A können bekannte OH-funktionelle Polymerisations-, Polykondensations- oder Polyadditionsharze sein, wie Polyacrylatharze, Polyesterharze und Polyurethanharze. Auch Mischungen aus mehreren Harzen derselben oder verschiedener Klassen sind geeignet. Das Molekulargewicht kann stark variieren, so kann beispielsweise das zahlendurchschnittliche Molekulargewicht (Mₙ) von 500 bis 100.000 betragen. Die Harze können linear oder verzweigt sein. Die Wasserverdünnbarkeit dieser Harze und die Stabilität der verdünnten Lösungen oder Dispersionen beruht in der Regel auf der Anwesenheit von ionisch hydrophilen Gruppen, wie Carboxylat-, Sulfonat- oder quaternäreb Ammoniumgruppen, die aus potentiell ionisch hydrophilen Gruppen, wie Carbonsäure-, Sulfonsäure- oder tertiären Aminogruppen, durch Neutralisierung entstehen. Die potentiell ionischen Carboxylgruppen werden in der Regel nicht vollständig neutralisiert, so daß die Harze im allgemeinen Säurezahlen zwischen 20 und 100 mg KOH/g aufweisen. Natürlich tragen auch die für die Reaktion mit den Isocyanatgruppen der Härterkomponente B benötigten Hydroxylgruppen zur Hydrophilie der Bindemittelkomponente A und damit zur Wasserverdünnbarkeit bei. Neben den Hydroxylgruppen können noch weitere hydrophilierende Gruppen im Molekül vorhanden sein, z.B. Polyoxyalkylengruppen, sowie weitere Gruppen, die mit Isocyanatgruppen reagieren können, wie am Polymergerüst angebundene Amino-, Imino-, Merkapto- oder CH-acide Gruppen, wie Malonsäurederivate. Bevorzugte Bindemittelkomponenten A haben Hydroxylzahlen von 50 bis 300, vorteilhaft von 100 bis 200.

Die Dispersionen der Bindemittelkomponente A können noch weitere wasserverdunnbare organische Polyhydroxyverbindungen enthalten, die mit der jeweiligen Bindemittelkomponente A verträglich sind, wie wasserlösliche, gegebenenfalls Oxyalkylengruppen aufweisende Alkohole mit mehr als zwei Hydroxylgruppen, wie Glycerin, Trimethylolethan, Trimethylolpropan, 1,2,4-Butantriol, 1,2,6-Hexantriol und Pentaerythrit sowie die Ethoxylierungs- und/oder Propoxylierungsprodukt dieser Alkohole. Mit ihrer Hilfe kann man die lacktechnischen Eigenschaften der ausgehärteten Beschichtung modifizieren und bestimmten Anforderungen anpassen.

Als erfindungsgemäße Polyisocyanate auf Basis von MPDI können biuret-, uretdion- und/oder isocyanuratbasierende Polyisocyanate (DE 31 51 853, DE 31 51 855 und DE 32 27 779) und/oder auch in allophanatmodifizierter Form, wie prinzipiell in EP 0 535 483 beschrieben, eingesetzt werden. Die mittlere NCO-Funktionalität beträgt im allgemeinen 2,3 bis 5. In einer bevorzugten Ausführungsform werden mittels destillativer Abtrennung Polyisocyanate mit einem Restmonomergehalt < 0,5 Gew.-% verwendet. Besonders bevorzugt sind Isocyanurathaltige Polyisocyanate.

Die Polyisocyanate auf Basis MPDI können in Abmischung mit anderen Polyisocyanaten zum Einsatz gelangen. Sehr gut geeignet dazu sind beispielsweise die (cyclo)aliphatischen "Lackpolyisocyanate" aufBasis von HDI, IPDI oder HMDI, die in der eingangs erwähnten EP 0 358 979 ausführlich beschrieben sind und/oder aromatische Polyisocyanate wie beispiels weise Tetramethylenxylylendiisocynat (TMXDI), Diisocyanatotoluol (TDI) und/oder Diisocyanatodiphenylmethan (MDI). In der Regel werden diese Polyisocyanate nur in geringen Mengen zugesetzt, um gewisse Eigenschaften der Beschichtungszusammensetzungen gezielt zu variieren.

Die gesamte Polyisocyanatkomponente sollte eine Viskosität bei 23°C von 10-20.000 mPas aufweisen. Falls erforderlich können die Polyisocyanate deshalb in Abmischung mit geringen Mengen an inerten Lösemitteln zum Einsatz gelangen, um die Viskosität auf einen dem Anwendungszweck entsprechenden Wert einzustellen. Die Menge derartiger Lösemittel sollte jedoch maximal so bemessen sein, daß in den letztendlich erhahenen erfindungsgemäßen Beschichtungsmitteln maximal 20 Gew.-% resultieren, wobei auch das gegebenenfalls in den wäßrigen Bindemitteldispersionen noch vorliegende Lösemittel mit in die Berechnung eingeht. Als Zusatzmittel für die Polyisocyanate geeignete Losemittel sind beispielsweise aromatische Kohlenwasserstoffe, Ester, Ether und/oder Ketone.

Die Verwendung von hydrophilierten Polyisocyanaten ist ebenfalls möglich. Dadurch können bestimmte Eigenschaften der Bindemittelkombinationen, wie z.B. Stabilität und Verträglichkeit, in vielen Fällen verbessert werden. Hydrophilierte Polyisocyanate enthalten beispielsweise Polyethersegmente auf Ethylen- gegebenenfalls auch Propylenoxidbasis und/oder Carboxylatgruppen.

Zur Herstellung der gebrauchsfertigen Beschichtungszusammensetzungen wird die Härterkomponente B kurz vor der Verarbeitung des Beschichtungsmittels in der Dispersion der Bindemittelkomponente A emulgiert, wobei die letztere die Funktion eines Emulgators für die Polyisocyanatkomponente übernimmt. Auf jeden Fall ist kein zusätzliches Emulgiermittel erforderlich, wenn auch in manchen Fällen hilfreich. Die beiden Komponenten können durch einfaches Verrühren bei Raumtemperatur gemischt werden. Vorteilhaft übt man starke Scherkräfte aus, z.B. durch schnellaufende Rührer, Dissolver, Vibratoren oder Turbomischer. Dadurch erreicht man die erwünschte feine Verteilung der Härterkomponente B in der Dispersion der Bindemittelkomponente A. Es ist vorteilhaft, wenn die mittlere Teilchengröße der fein verteilten Härterkomponente B in demselben Größenordnungsbereich liegt wie diejenige der Bindemittelkomponente A. Die Mengen der Bindemittelkomponente A und der Härterkomponente B werden so bemessen, daß das Aquivalentverhältnis der Hydroxylgruppen in der Bindemittelkomponente A zu den Isocyanatgruppen in der Härterkomponente B 1:0,5 bis 1:5, vorzugsweise 1:0,9 bis 1:3 beträgt.
Wenn die Viskosität für das vorgesehene Auftragsverfahren zu hoch ist, kann sie durch Zusatz von organischem Lösemittel oder Wasser ohne weiteres auf einen anwendungsgerechten Wert eingestellt werden.

Bei der Vermischung der Komponenten A und B entzieht die Bindemittelkomponente A die Härterkomponente B dem Zugriff des Wassers, sei es durch Diffusion des Polyisocyanats in die dispergierten Teilchen der Bindmittelkomponente A, sei es durch eine Stabilisierung der gebildeten Polyisocyanattröpfchen durch eine emulgierende Wirkung der dispergierten Polyolteilchen der Bindemittelkomponente A. Jedenfalls tritt bei zweckentsprechender Lagerung und Verarbeitung der Beschichtungszusam menset zungen kein nennenswerter Verlust an Polyisocyanat durch Reaktion mit Wasser ein. Dementsprechend findet auch keine nennenswerte Kohlendioxidentwicklung statt.

Die Beschichtungszusammensetzungen nach der Erfindung weisen den Vorteil auf, daß sie ohne Zusatz von äußeren Emulgatoren formuliert werden können. Sie sind daher vorzugsweise frei von externen Emulgatoren. Selbstverständlich ist es jedoch möglich, bei der Formulierung Emulgatoren zuzusetzen. Weiterhin können sie andere übliche Hilfs- und Zusatzstoffe enthalten, beispielsweise Pigmente, Entschäumungsmittel, Verlaufsmittel, Verdickungsmittel, Sikkative, Füllstoffe und/oder Katalysatoren für die Isocyanat-Additionsreaktion. Diese Hilfs- und Zusatzstoffe sind keine erfindungswesentlichen Bestandteile der Beschichtungszusammensetzungen. Sie befinden sich im allgemeinen in der Bindemittelkomponente A und können dieser gegebenenfalls vor oder nach ihrer Dispergierung zugesetzt werden. Ersteres ist immer dann empfehlenswert, wenn der betreffende Hilfs- und Zusatzstoff nicht in die wäßrige Phase gelangen soll.

Der Festkörpergehalt der Beschichtungszusammensetzungen liegt bei der Anwendung als Klarlack im allgemeinen zwischen 25 und 60 Gew.-%, bevorzugt zwischen 30 und 55 Gew.-%, und Anteil organischer Hilfslösemittel zwischen 0 und 20 Gew.-%, bevorzugt zwischen 0 und 15 Gew.-%. Der Anteil des Wassers in der Beschichtungszusammensetzung liegt dementsprechend in der Regel im Bereich von 20 bis 75 Gew.-%, bevorzugt zwischen 30 und 65 Gew.-%. Die Viskosität der Beschichtungszusammensetzung bei 23°C beträgt am Anfang, d.h. unmittelbar nach dem Mischen der Komponenten A und B und gegebenenfalls Verdünnung, üblicherweise 10 bis 1.000 mPas, und der pH-Wert liegt in der Regel zwischen 6 und 10.

Da die so hergestellten Beschichtungszusammensetzungen reaktionsfähige Komponenten enthalten, können sie vor ihrer Verarbeitung nicht unbegrenzt gelagert werden. Die Topfzeit/Verarbeitungszeit hängt u.a. von der chemischen Natur der Bindemittel komponente A und der Härterkomponente B ab. Im allgemeinen sollten die Beschichtungszusammensetzungen, bei Raumtemperatur gelagert, spätestens innerhalb von 12 Stunden, zweckmäßig innerhalb von 8 Stunden nach ihrer Herstellung durch Mischen der Komponenten A und B verbraucht werden. Die Beschichtungszusammensetzungen eignen sich für praktisch alle Einsatzgebiete, in denen mit lösemittelhaltigen oder lösemittelfreien Beschichtungssystemen hochwertige Beschichtungsmittel auf Substraten erzeugt werden, die die erforderlichen Härtungstemperaturen vertragen. Sie werden nach üblichen Verfahren auf die Substrate aufgebracht, wie Rakeln, Spritzen, Tauchen oder Streichen. Die Härtung der erfindungsgemäßen Beschichtungen erfolgt in der Regel bevorzugt bei 20 bis 150°C, wobei die Aushärtung durch höhere Temperaturen beschleunigt wird. Die resultierenden Lackfilme sind kratztest und lösemittelbeständig, blasenfrei und als Klarlacke transparent. Die Beschichtungszusammensetzungen nach der Erfindung eignen sich besonders zur Herstellung von Decklackierungen auf Holz-, Metall- und Kunststoffsubstraten.

### Beispiele

### Beispiel 1 und Vergleich A

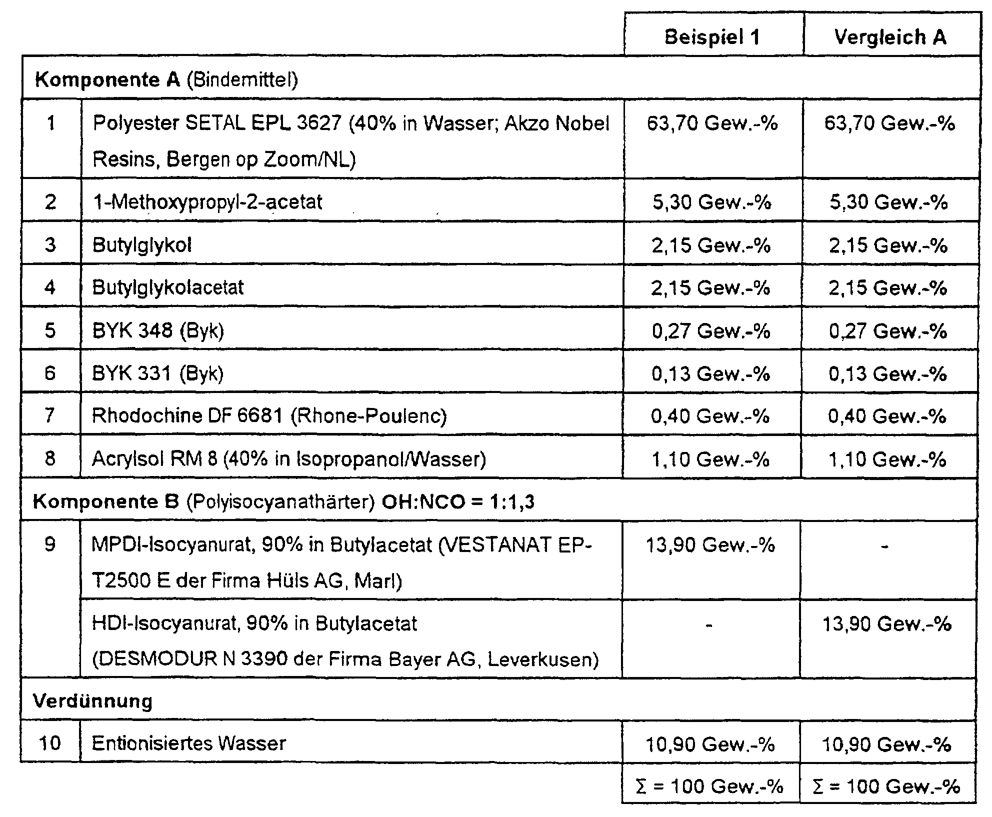

### Herstellung des erfindungsgemäßen 2K-PUR-Beschichtungsmittels

Die Komponenten 1-8 werden vorgelegt und mit einem Rührer bei einer Umfangsgeschwindigkeit von 4 m/sec gemischt. Nach guter Durchmischung wird Komponente 9 bei gleicher Umfangsgeschwindigkeit des Rührers zugegeben. Unter gleichbleibenden Mischbedingungenwird anschließend Komponente 10 zur Verdünnung langsam zugegeben. Nach beendeter Zugabe wird unverändert weitere 5 min gerührt. Das applikationsfertige System besitzt eine Viskosität entsprechend einer Auslaufzeit von ca. 20 sec im DIN4-Becher, einen Festkörpergehalt von 38 Gew.-% und einen Gehalt an organischem Hilfslöser von 11,3 Gew.-%.

### Vergleichsbeispiel A

Die Herstellung des Vergleichsbeispiels auf Basis HDI-Isocyanurat erfolgte in Analogie zur Herstellung des erfindungsgemäßen vorstehenden 2K-PUR-Beschichtungsmittels.

### Mechanische Kenndaten Beispiel 1 und Vergleich A

Dieerfindungsgemäße2K-PUR-Beschichtungwurdewievorstehendbeschriebenhergestellt, unmittelbar anschließend zur Bestimmng der mechanischen Kenndaten auf phosphatiertes Stahlblech (Bonder 26S/60/OC) aufgetragen und bei Raumtemperatur bzw. 30 min bei 80°C gehärtet. Die nachstehend angegebenen mechanischen Kenndaten verstehen sich als die erreichbaren Endwerte. Zur Bestimmung des Härteverlaufs wurde das bei Raumtemperatur bzw. das 30 min bei 80°C getrocknete Stahlblech bei Raumtemperatur gelagert und nach 1 Tag, 3 Tagen und 1 Woche abermals vermessen.

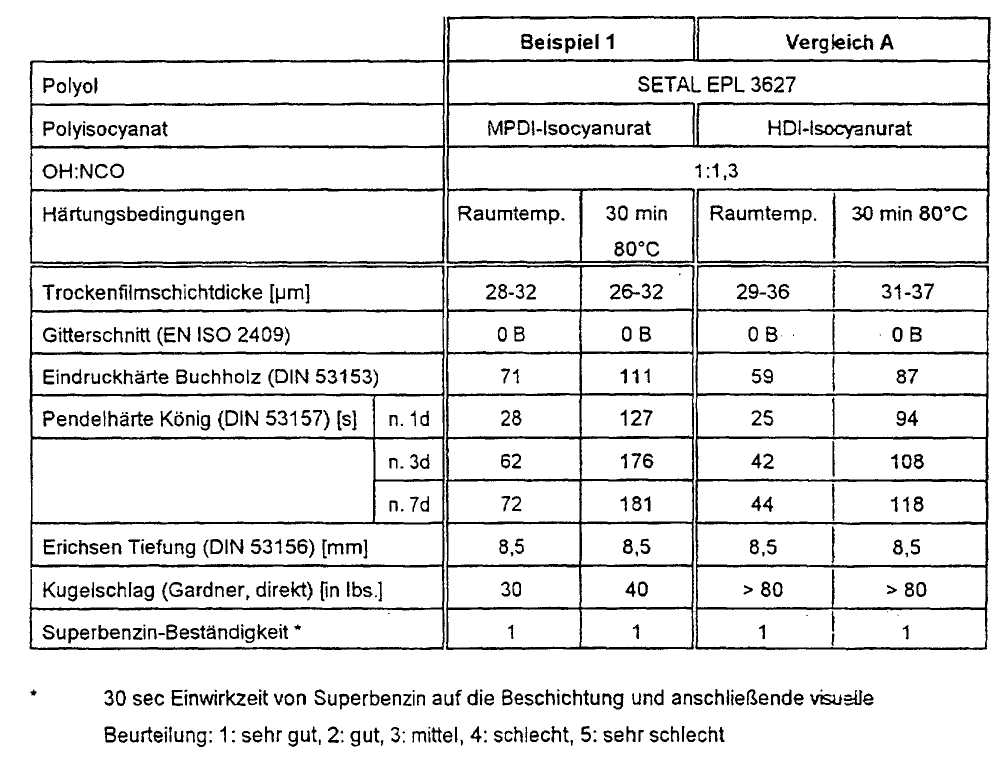

### Beispiel 2 und Vergleich B

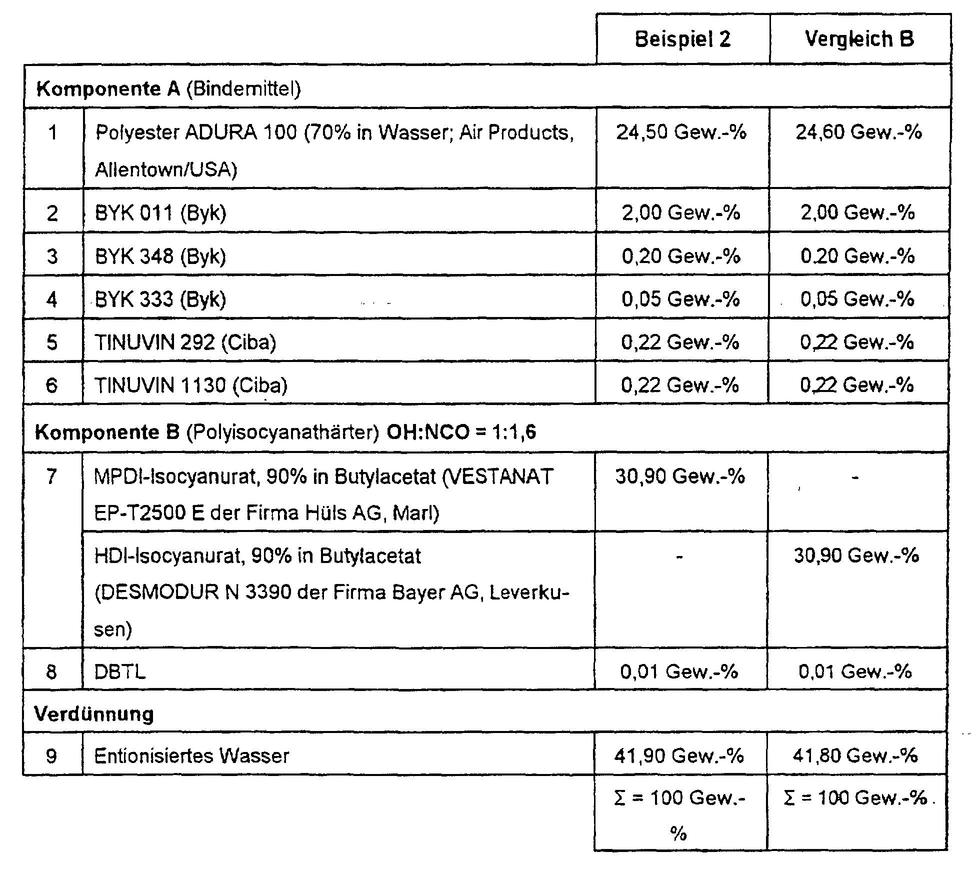

### Herstellung des erfindungsgemäßen 2K-PUR-Beschichtungsmittels

Die Komponenten 1-6 werden vorgelegt und mit einem Rührer bei einer Umfangsgeschwindigkeit von 4 m/sec gemischt. Nach guter Durchmischung werden zunächst Komponente 7 und dann 8 bei gleicher Umfangsgeschwindigkeit des Rührers zugegeben. Unter gleichbleibenden Mischbedingungen wird anschließend Komponente 9 zur Verdünnung langsam zugegeben. Nach beendeter Zugabe wird unverändert weitere 5 min gerührt. Das applikationsfertige System besitzt eine Viskosität entsprechend einer Auslaufzeit von ca. 20 sec im DIN4-Becher, einen Festkörpergehalt von 45 Gew.-% und einen Gehalt an organischem Hilfslöser von 3,1 Gew.-%.

### Vergleichsbeispiel B

Die Herstellung des Vergleichsbeispiels auf Basis HDI-Isocyanurat erfolgte in Analogie zur Herstellung des erfindungsgemäßen vorstehenden 2K-PUR-Beschichtungsmittels.

### Mechanische Kenndaten Beispiel 2 und Vergleich B

Dieerfindungsgemäße2K-PUR-Beschichtung wurde wie vorstehend beschrieben her gestelle, unmittelbar anschließend zur Bestimmng der mechanischen Kenndaten auf phosphatiertes Stahlblech (Bonder 26S/60/OC) aufgetragen und bei Raumtemperatur bzw. 30 min bei 80°C gehärtet. Die nachstehend angegebenen mechanischen Kenndaten verstehen sich als die erreichbaren Endwerte. Zur Bestimmung des Harteverlaufs wurde das bei Raumtemperatur bzw. das 30 min bei 80°C getrocknete Stahlblech bei Raumtemperann gelagert und nach 1 Tag, 3 Tagen und 1 Woche abermals vermessen.

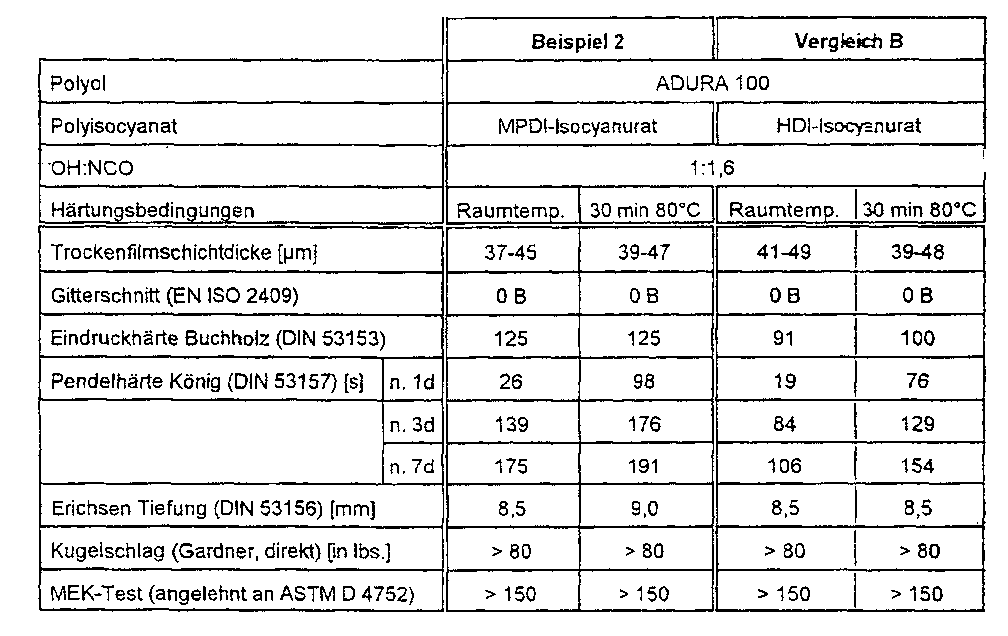

### Beispiel 3 und Vergleich C

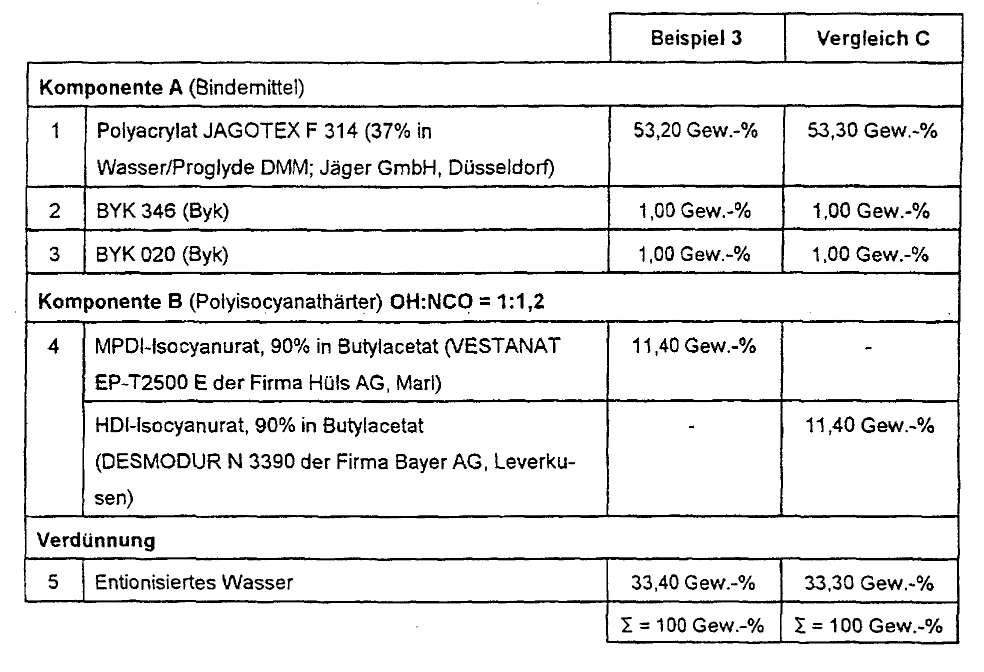

### Herstellung des erfindungsgemäßen 2K-PUR-Beschichtungsmittels

Die Komponenten 1-3 werden vorgelegt und mit einem Rührer bei einer Umfangsgeschwindigkeit von 4 m/sec gemischt. Nach guter Durchmischung wird Komponente 4 bei gleicher Umfangsgeschwindigkeit des Rührers zugegeben. Unter gleichbleibenden Mischbedingungen wird anschließend Komponente 5 zur Verdünnung langsam zugegeben. Nach beendeter Zugabe wird unverändert weitere 5 min gerührt.Das applikationsfertige System besitzt eine Viskosität entsprechend einer Auslaufzeit von ca. 20 sec im DIN4-Becher, einen Festkörpergehalt von 30 Gew.-% und einen Gehalt an organischem Hilfslöser von 4,9 Gew.-%.

### Vergleichsbeispiel C

Die Herstellung des Vergleichsbeispiels auf Basis HDI-Isocyanurat erfolgte in Analogie zur Herstellung des erfindungsgemäßen vorstehenden 2K-PUR-Beschichtungsmittels.

### Mechanische Kenndaten Beispiel 3 und Vergleich C

Dieerfin dungsgemβe 2K-PUR-Beschichtung wurde wie vorstehend beschrieben hergestellt, unmittelbar anschließend zur Bestimmng der mechanischen Kenndaten auf phosphatiertes Stahlblech (Bonder 26S/60/OC) aufgetragen und bei Raumtemperatur bzw. 30 min bei 80°C gehärtet. Die nachstehend angegebenen mechanischen Kenndaten verstehen sich als die erreichbaren Endwerte. Zur Bestimmung des Härteverlaufs wurde das bei Raumtemperatur bzw. das 30 min bei 80°C getrocknete Stahlblech bei Raumtemperatur gelagert und nach Tag, 3 Tagen und 1 Woche abermals vermessen.

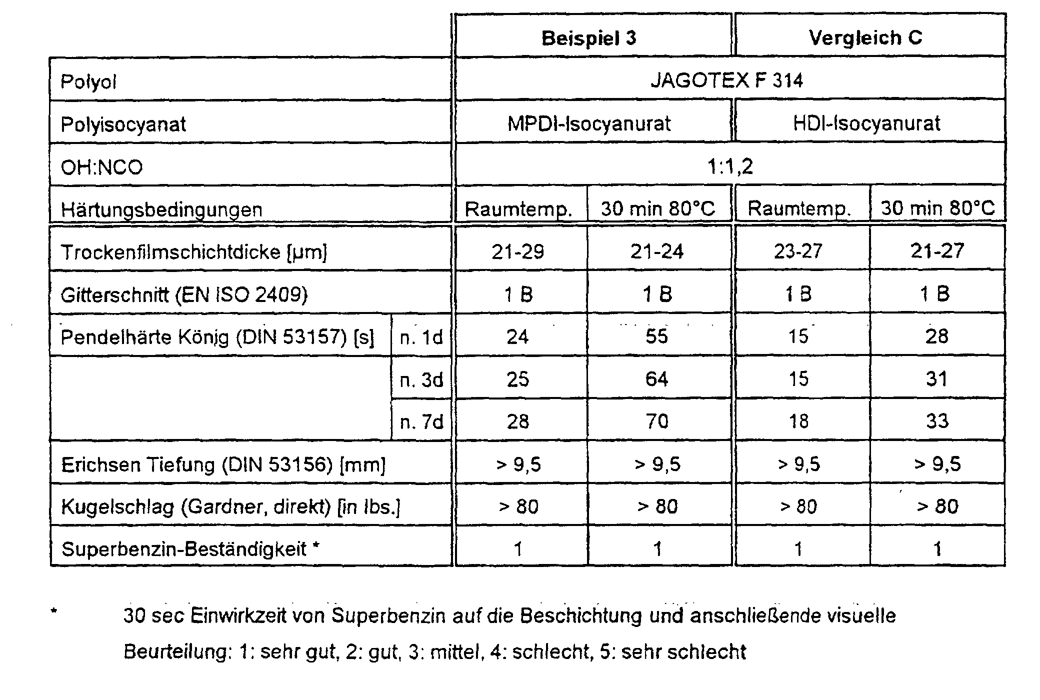

### Beispiel 4:

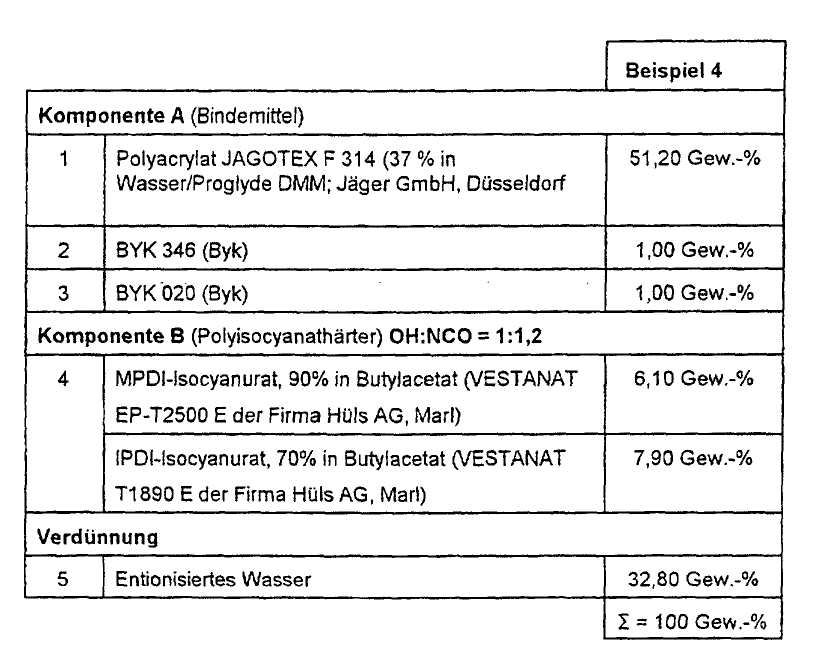

### Herstellung des erfindungsgemäßen 2K-PUR-Beschichtungsmittels

Die Komponenten 1-3 werden vorgelegt und mit einem Rührer bei einer Umfangsgeschwindigkeit von 4 m/sec gemischt. Nach guter Durchmischung wird eine Mischung der Komponenten 4 und 5 bei gleicher Umfangsgeschwindigkeit des Rührers zugegeben. Unter gleichblei bende Mischbeding ungen wird anschließend Komponente 6 zur Verdünnung langsam zugegeben. Nach beendeter Zugabe wird unverändert weitere 5 min geruhrt. Das applikationsfertige System besitzt eine Viskosität entsprechend einer Auslaufzeit von ca. 20 sec im DIN4-Becher, einen Festkörpergehalt von 30 Gew.-% und einem Gehalt an organischem Hilfslöser von 6,6 Gew.-%.

### Mechanische Kenndaten Beispiel 4

Die erfindungsgemäße 2K-PUR-Beschichtung wurdewievorstehend beschrieben her gestellt, unmittelbar anschließend zur Bestimmung der mechanischen Kenndaten auf phosphatiertes Stahlblech (Bonder 26S/60/OC) aufgetragen und bei Raumtemperatur bzw. 30 min bei 80 °C gehärtet. Die nachstehend angegebenen mechanischen Kenndaten verstehen sich als die rreichbaren Endwerte. Zur Bestimmung des Härteverlaufs wurde das bei Raumtemperatur bzw. das 20 min bei 80 °C getrocknete Stahlblech bei Raumtemperatur gelagert und nach 1 Tag, 3 Tagen und 1 Woche abermals vermessen.

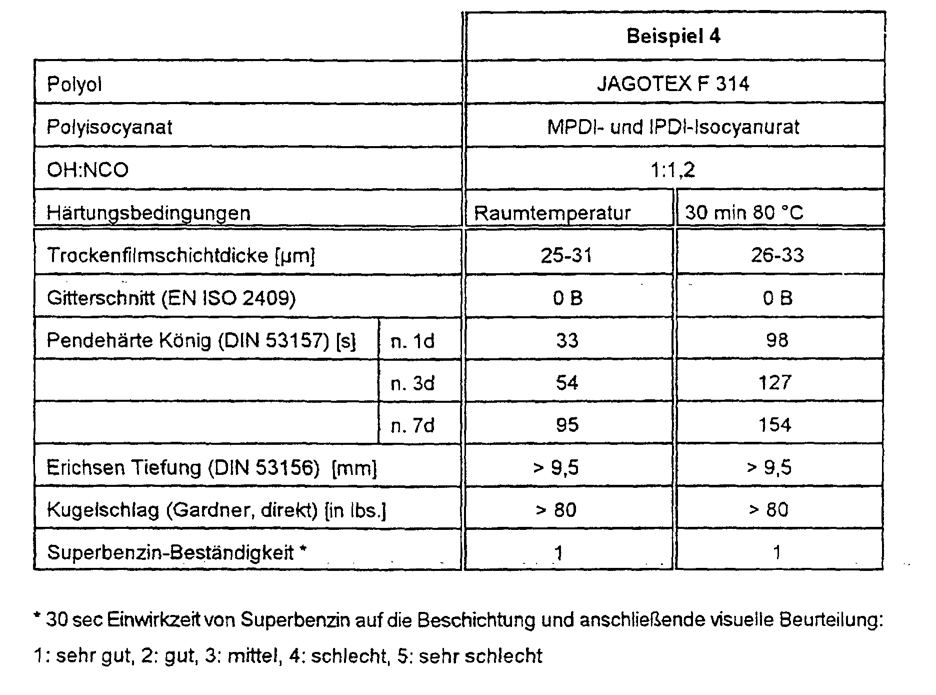

## Patentansprüche

1. Wäßrige 2K-PUR-Beschichtungszusammensetzung im wesentlichen enthaltend:
A) eine wäßrige Dispersion mindestens einer Polyolkomponente,
B) eine Polyisocyanatkomponente, auf Basis von 2-Methylpentandiisocyanat-1,5 wobei die Mengenverhältnisse von A und B einen OH/NCO-Aquivalentverhältnis von 1 : 0,5 bis 1 : 5 entsprechen.

2. 2K-PUR-Beschichtungszusammensetzungen gemäß Anspruch 1,
dadurch gekennzeichnet,
daß als Polyisocyanate auf Basis von MPDI biuret-, uretdion- und/oder isocyanuratbasierende Polyisocyanate, auch in allophanat-modifizierter Form, mit einer mittleren Funktionalität von 2,3 - 5 enthalten sind.

3. 2K-PUR-Beschichtungszusammensetzungen nach mindestens einem der Ansprüche 1 - 2,
dadurch gekennzeichnet,
daß das Isocyanurat des MPDI enthalten ist.

4. 2K-PUR-Beschichtungszusammensetzungen nach mindestens einem der Ansprüche 1 - 3,
dadurch gekennzeichnet,
daß Polyisocyanate mit einem Restmonomergehalt < 0,5 Gew.-% enthalten sind.

5. 2K-PUR-Beschichtungszusammensetzungen nach mindestens einem der Ansprüche 1 - 4,
dadurch gekennzeichnet,
daß als Polyolkomponente A) hydroxylgruppenhaltige Polyacrylat-, Polyester- und/oder Polyurethanharze enthalten sind.

6. 2K-PUR-Beschichtungszusammnesetzungen nach mindestens einem der Ansprüche 1 - 5,
dadurch gekennzeichnet,
daß weitere Polyisocyanate auf Basis von HDI, IPDI, HMDI und/oder TMXDI, TDI, MDI enthalten sind.

7. 2K-PUR-Beschichtungszusammensetzungen nach mindestens einem der Ansprüche 1 - 6,
dadurch gekennzeichnet,
daß Hilfsmittel enthalten sind.

8. Wäßrige Beschichtungsmittel, enthaltend wäßrige 2K-PUR-Beschichtungszusammensetzungen nach mindestens einem der Ansprüche 1-7.

## Claims

1. Aqueous two-component polyurethane coating compositions essentially comprising:
A) an aqueous dispersion of at least one polyol component,
B) a polyisocyanate component based on 2-methylpentane 1,5-diisocyante,
the proportions of A and B corresponding to an OH/NCO equivalents ratio of from 1:0.5 to 1:5.

2. Compositions according to claim 1, characterized in that biuret-, uretdione- and/or isocyanurate-based polyisocyanates, including those in allophanate-modified form, having an average functionality of 2.3 - 5 are present as MPDI - based polyisocyanates.

3. Compositions according to at least one of claims 1 - 2, characterized in that the isocyanurate of MPDI is present.

4. Compositions according to at least one of claims 1 - 3, characterized in that polyisocyanates having a residual monomer content of < 0.5 % by weight are present.

5. Compositions according to at least one of claims 1 - 4, characterized in that hydroxyl-containing polyacrylate, polyester and/or polyurethane resins are present as polyol component A).

6. Compositions according to at least one of claims 1 - 5, characterized in that further polyisocyanates based on HDI, IPDI, HMDI and/or TMXDI, TDI, MDI are present.

7. Compositions according to at least one of claims 1 - 6, characterized in that auxiliaries are present.

8. Aqueous coating materials comprising aqueous two-component polyurethane coating compositions according to at least one of claims 1 - 7.

## Revendications

1. Composition aqueuse de revêtement PUR à deux composants contenant pour l'essentiel:
A) une dispersion aqueuse d'au moins un composant polyol,
B) un composant polyisocyanate à base de diisocyanate 1,5 de 2-méthylpentane,
C) les rapports en quantités de A et de B correspondant à un rapport en équivalent OH/NCO de 1:0,5 à 1:5.

2. Compositions de revêtement en PUR à deux composants selon la revendication 1,
caractérisées en ce que
comme polyisocyanates à base de MPDI, des polyisocyanates à base de biuret, d'uretdione et/ou d'isocyanurate, également sous forme modifiée d'un allophanate, ayant une fonctionnalité moyenne de 2,3 à 5, sont contenus.

3. Compositions de revêtement en PUR à deux composants selon au moins l'une quelconque des revendications 1 à 2,
caractérisées en ce que
l'isocyanurate de MPDI est contenu.

4. Compositions de revêtement en PUR à deux composants selon au moins l'une quelconque des revendications 1 à 3,
caractérisées en ce que
des polyisocyanates ayant une teneur en monomère résiduel < 0,5 % en poids, sont contenus.

5. Compositions de revêtement en PUR à deux composants selon au moins l'une quelconque des revendications 1 à 4,
caractérisées en ce que
comme composants de polyol A, des résines de polyacrylate, de polyester et/ou de polyuréthane contenant des groupes hydroxyle sont contenues.

6. Compositions de revêtement en PUR à deux composants selon au moins l'une quelconque des revendications 1 à 5,
caractérisées en ce que
d'autres polyisocyanates à base de HDI, IPDI, HMDI et/ou TMXDI, TDI, MDI sont contenus.

7. Compositions de revêtement en PUR à deux composants selon au moins l'une quelconque des revendications 1 à 6,
caractérisées en ce que
des agents auxiliaires sont contenus.

8. Agent de revêtement aqueux contenant des compositions aqueuses de revêtement en PUR à deux composants selon au moins l'une quelconque des revendications 1 à 7.
